# EUROPÄISCHE PATENTANMELDUNG

(11) **EP 1 715 275 A2**
(43) Veröffentlichungstag der Anmeldung: **25.10.2006**
(21) Anmeldenummer: 06007868.0
(22) Anmeldetag: 13.04.2006
(51) Int. Cl.: F28D 20/00, F28D 1/047

(54) **Natursteinheizkörper sowie heizbarer Gegenstand damit, Verwendung davon und Herstellungsverfahren dafür**

(30) Priorität: 18.04.2005 DE 202005006179 U
(71) Anmelder: Fritz Hiller jun., 92331 Parsberg (DE)
(72) Erfinder: Fritz Hiller jun., 92331 Parsberg (DE)
(74) Vertreter: Lindner, Manfred Klaus

(57) **Zusammenfassung**

Natursteinheizkörper mit wenigstens einem Natursteinplattenelement (2) und einem Heizrohrsystem (3), das mit dem Natursteinplattenelement (2) in Kontakt ist und durch das eine Heizflüssigkeit geleitet ist, wobei das Natursteinplattenelement (2) auf einer Seite (Rückseite (9)) wenigstens eine nutartige oder flächige Ausnehmung (5) enthält, in der das Heizrohrsystem (3) zumindest teilweise aufgenommen ist. Ferner betrifft die Erfindung einen heizbaren Gegenstand mit einem solchen Natursteinheizkörper, Außerdem betrifft die Erfindung die Verwendung eines Natursteinheizkörpers und dessen Herstellung.

## Beschreibung

Die Erfindung betrifft Natursteinheizkörper sowie einen heizbaren Gegenstand damit, Verwendungen davon und Herstellungsverfahren dafür.

Beispielsweise aus den Veröffentlichungen DE 200 05 104 U1 und DE 202 08 007 U1 sind Natursteinheizkörper bekannt, die wenigstens ein Natursteinplattenelement und ein Heizrohrsystem enthalten, das mit dem Natursteinplattenelement in Kontakt ist und durch das eine Heizflüssigkeit geleitet ist.

Bei dem Flächenheizkörper aus Naturstein gemäß der DE 200 05 104 U1 ist das Heizrohrsystem so zwischen zwei Natursteinplattenelementen angeordnet, dass ein Konvektionsheizkörper gebildet ist. Einerseits ist dieser Konvektionseffekt nicht optimal, da dabei z.B. auch immer Staubteilchen mit transportiert werden, und andererseits verbraucht der Konvektionseffekt-Aufbau aus dem Heizrohrsystem Wärme, die nicht mehr jedenfalls an das raumseitige Natursteinplattenelement abgegeben werden kann, so dass dessen Wirkung als Wärme abstrahlende Platte geringer oder der Wärmebedarf aus dem Heizrohrsystem höher ist. Dieser Stand der Technik stellt damit eine recht unbefriedigende Lösung dar.

Der Natursteinheizkörper gemäß der DE 202 08 007 U1 enthält ein Heizrohrsystem, das in ein Epoxydharz eingegossen und darüber mit dem Natursteinplattenelement in Verbindung ist. Das Heizrohrsystem ist somit entgegen den Angaben in der DE 202 08 007 U1 nicht in das Natursteinplattenelement eingearbeitet, sondern zusammen mit dem Epoxydharzverguss flächig damit verbunden. Durch diese Bauweise wird zum einen Wärmeenergie vergeudet, um den Epoxydharzverguss des Heizrohrsystems und somit letztlich einen sehr voluminösen Aufbau zu erwärmen, und zum anderen durch den Übergang zwischen dem Epoxydharz und dem Naturstein.

Die vorliegende Erfindung hat und erreicht das Ziel, einen möglichst effizienten Natursteinheizkörper einen heizbaren Gegenstand damit und ein Herstellungsverfahren dafür zu schaffen.

Ein erfindungsgemäßer Natursteinheizkörper enthält somit wenigstens ein Natursteinplattenelement und ein Heizrohrsystem, das mit dem Natursteinplattenelement in Kontakt ist und durch das eine Heizflüssigkeit geleitet ist, wobei das Natursteinplattenelement auf einer Seite wenigstens eine nutartige oder flächige Ausnehmung enthält, in der das Heizrohrsystem zumindest teilweise aufgenommen ist, und wobei das Heizrohrsystem mit Vorzug über eine Gussmasse mit dem Natursteinplattenelement in Kontakt ist.

Bei der Seite mit den/der Ausnehmung(en) handelt es sich üblicherweise um die sogenannte Rückseite des Natursteinheizkörpers, im Gegensatz zu seiner Sichtseite.

Vorzugsweise ist jede Ausnehmung ein Schnitt oder eine Ausfräsung mit ausreichender Breite zur Aufnahme jeweils eines Rohres des Heizrohrsystems. Bevorzugt enthält das Heizrohrsystem wenigstens ein Rohr oder Rohrelement, das gerade oder gebogen, insbesondere ein- oder mehrfach S-förmig gebogen ist, oder eine Gitterstruktur aus einer Mehrzahl von Rohren. Es ist weiter bevorzugt, wenn die Gussmasse zumindest weitgehend und insbesondere vollständig ausgehärtet ist.

Bei Weiterbildungen der Erfindung enthält das Heizrohrsystem wenigstens eine Fluidleitung, die rohrartig ist und vorzugsweise zumindest im wesentlichen aus Kupfer, Stahl, Edelstahl oder PVC besteht. Weiterhin ist es bevorzugt, wenn das Heizrohrsystem Zuleitungs- und Ableitungsanschlüsse für ein Wärmeträgerfluid und/oder Zuleitungssteuer- und/oder -regeleinrichtungen aufweist, die selbst Wärmesensoren enthalten können oder denen Wärmesensoren an oder in dem Natursteinplattenelement oder in einem Abstand davon zugeordnet sind. Insbesondere Wärmesensoren an oder in dem Natursteinplattenelement ermöglichen eine Berücksichtigung der Wärmekapazität, Restwärme und dergleichen des Natursteinplattenelementes und somit eine effiziente Heizsteuerung und/oder -regelung.

Weiterhin ist es bevorzugt, wenn das Heizrohrsystem wenigstens eine rohrartige Fluidleitung enthält, die zumindest im wesentlichen und besonders bevorzugt vollständig innerhalb der Außenkontur des Natursteinplattenelementes liegt. Anders ausgedrückt ist jede Ausnehmung von einer solchen Tiefe, dass die zugehörige rohrartige Fluidleitung zumindest im wesentlichen und insbesondere vollständig darin untergebracht ist. Alternativ oder zusätzlich kann jeder solche Schnitt oder jede Ausfräsung zur Bildung von Hinterschneidungen schräg sein oder eine entsprechende Querschnittsform aufweisen, so dass die zugehörige rohrartige Fluidleitung zumindest teilweise hinter der Hinterschneidung liegt.

Ferner kann vorgesehen sein, dass der Natursteinheizkörper ein Abdeckelement enthält, das auf der Seite der wenigstens einen Ausnehmung an dem Natursteinplattenelement angeordnet ist, wobei das Abdeckelement vorzugsweise aus Naturstein besteht, eine Wärmeisolierung enthält oder bildet und/oder Befestigungseinrichtungen für seine Montage und/oder die Montage des Natursteinplattenelementes an ihm aufweist.

Bei dem Herstellungsverfahren für einen Natursteinheizkörper ist gemäß der Erfindung vorgesehen, dass auf einer Seite eines Natursteinplattenelementes wenigstens eine Ausnehmung eingebracht wird, dass ein Heizrohrsystem zumindest teilweise in dieser wenigstens einen Ausnehmung untergebracht wird, und dass vor oder nach dem Unterbringen des Heizrohrsystems in der Ausnehmung eine Gussmasse in die Ausnehmung gegeben wird. Es ist bevorzugt, dass jede Ausnehmung durch Schneiden oder Fräsen auf der einen Seite des Natursteinplattenelementes hergestellt wird. Bei der Seite mit den/der Ausnehmung(en) handelt es sich üblicherweise um die sogenannte Rückseite des Natursteinheizkörpers, im Gegensatz zu seiner Sichtseite.

Weiterhin schafft die Erfindung einen heizbaren Gegenstand mit einem solchen Natursteinheizkörper.

Vorzugsweise handelt es sich bei diesem Gegenstand und insofern auch bei einer Verwendung eines solchen Natursteinheizkörpers um einen Massagetisch, eine Rüttelbank, eine Wärmebank, eine Duschwanne, eine Duschrückwand oder Duschkabinenrückwand, oder eine Wannenrückwand oder Badewannenrückwand.

Bevorzugte Materialien für den Natursteinheizkörper für diese Gegenstände oder die entsprechende Verwendung des Natursteinheizkörpers ist Stein.

Gemäß einem auch selbständig als Erfindung anzusehenden Aspekt ist für die in den vorliegenden Unterlagen im übrigen erläuterte und als erfindungsgemäß dargestellte Bauart eines Natursteinheizkörpers als Material insbesondere für diese Gegenstände oder die entsprechende Verwendung eines Heizkörpers analog zu dem Natursteinheizkörper als weiteres Material auch Beton, Korean oder Hydrostone vorgesehen.

Soweit vorstehend und/oder in den Ansprüchen Alternativen aufgezeigt sind, ist in jeder dieser Alternativen für sich eine vorzugsweise Ausgestaltung zu sehen, die auch für sich alleine betrachtet, d.h. unabhängig von den einzelnen anderen Alternativen als schützenswert erachtet wird. Insbesondere lässt sich die Erfindung auch auf einzelne Alternativen beschränken, d.h. unabhängig von anderen Alternativen und Kombinationen damit zum Gegenstand selbständiger und abhängiger Ansprüche machen.

Vorzugsweise Weiterbildungen der Erfindung insgesamt ergeben sich aus den Ansprüchen sowie deren Kombinationen und im übrigen aus der Gesamtheit der vorliegenden Unterlagen.

Die Erfindung wird nachfolgend anhand von Ausführungsbeispielen auch unter Bezugnahme auf die begleitenden Zeichnungen lediglich exemplarisch näher beschrieben, in denen
- Fig. 1: eine schematische Rückseitenansicht eines ersten Ausführungsbeispiels eines Natursteinheizkörpers,
- Fig. 2: eine schematische Schnittansicht des ersten Ausführungsbeispiels des Natursteinheizkörpers nach der Fig. 1,
- Fig. 3: eine schematische Rückseitenansicht eines zweiten Ausführungsbeispiels eines Natursteinheizkörpers,
- Fig. 4: eine schematische Schnittansicht des zweiten Ausführungsbeispiels des Natursteinheizkörpers nach der Fig. 3,
- Fig. 5: eine schematische Rückseitenansicht eines dritten Ausführungsbeispiels eines Natursteinheizkörpers,
- Fig. 6: eine schematische Schnittansicht des dritten Ausführungsbeispiels des Natursteinheizkörpers nach der Fig. 5,
- Fig. 7: eine schematische Rückseitenansicht eines vierten Ausführungsbeispiels eines Natursteinheizkörpers,
- Fig. 8: eine schematische Schnittansicht des vierten Ausführungsbeispiels des Natursteinheizkörpers nach der Fig. 7,
- Fig. 9: eine schematische Rückseitenansicht eines fünften Ausführungsbeispiels eines Natursteinheizkörpers,
- Fig. 10: eine schematische Schnittansicht des fünften Ausführungsbeispiels des Natursteinheizkörpers nach der Fig. 9,
- Fig. 11: eine schematische Rückseitenansicht eines sechsten Ausführungsbeispiels eines Natursteinheizkörpers,
- Fig. 12: eine schematische Schnittansicht des sechsten Ausführungsbeispiels des Natursteinheizkörpers nach der Fig. 11,
- Fig. 13: eine schematische Rückseitenansicht eines siebten Ausführungsbeispiels eines Natursteinheizkörpers,
- Fig. 14: eine schematische Schnittansicht des siebten Ausführungsbeispiels des Natursteinheizkörpers nach der Fig. 11,
- Fig. 15: eine schematische Rückseitenansicht eines achten Ausführungsbeispiels eines Natursteinheizkörpers,
- Fig. 16: eine schematische Schnittansicht des achten Ausführungsbeispiels des Natursteinheizkörpers nach der Fig. 11, und
- Fig. 17: eine schematische Schnittansicht einer Einzelheit eines neunten Ausführungsbeispiels eines Natursteinheizkörpers.

Anhand der nachfolgend beschriebenen und in den Zeichnungen dargestellten Ausführungs- und Anwendungsbeispiele wird die Erfindung lediglich exemplarisch näher erläutert d.h. sie ist nicht auf diese Ausführungs- und Anwendungsbeispiele oder auf die jeweiligen Merkmalskombinationen innerhalb der Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Einzelne Ausgestaltungsmöglichkeiten und Varianten der Erfindung ergeben sich aus den vorherigen allgemeinen Darstellungen. Daraus ergeben sich zahlreiche Ausführungsbeispiele der vorliegenden Erfindung, und diese Ausführungsbeispiele aus den Merkmalskombinationen der vorherigen allgemeinen Darstellungen sind hiermit durch Bezugnahme auch Bestandteil der nun folgenden Befassung mit Ausführungsbeispielen.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

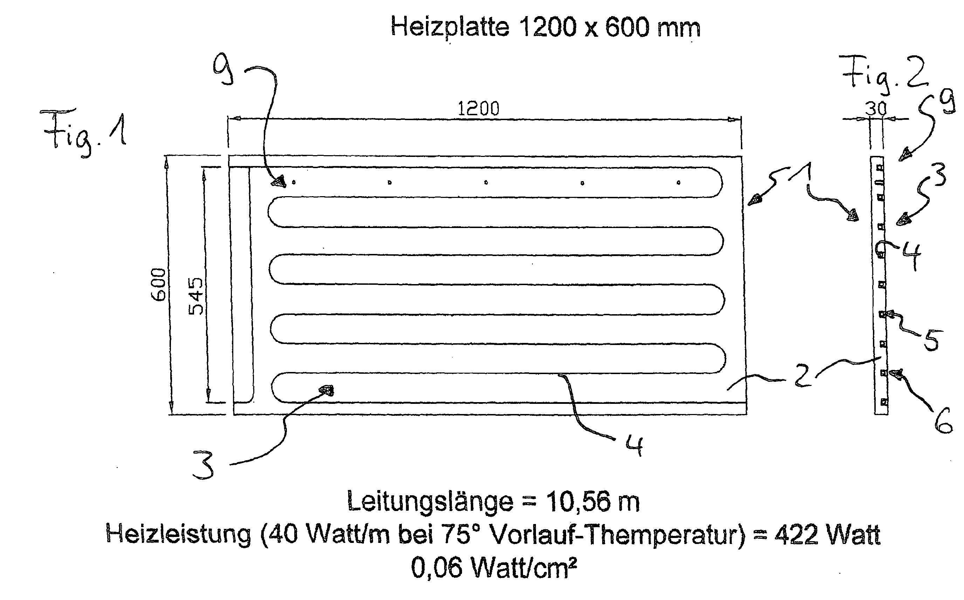

In den Fig. 1 bis 16 sind erste bis achte Ausführungsbeispiele eines Natursteinheizkörpers 1 in schematischen Rückansichten und Schnittansichten gezeigt. Die Abmessungsangaben in den Figuren sind, auch wenn es sich bei einzelnen Angaben um zumindest annähernd bevorzugte Werte handelt, lediglich als Beispiele zu verstehen. Insbesondere die Höhen- und Breitenabmessungen können entsprechend örtlichen Platzanforderungen gewählt werden. Auch die Leitungslängen- und Heizleistungsangaben sind lediglich als exemplarische Werte zu verstehen.

Jeder solche Natursteinheizkörper 1 enthält ein Natursteinplattenelement 2 und ein Heizrohrsystem 3. Letzteres weist ein Rohr 4 auf, das in einer Ausnehmung oder in Ausnehmungen 5 in dem Natursteinplattenelement 2 verlegt ist. Jede Ausnehmung 5 ist vorzugsweise so tief, dass das Rohr 4 oder die allgemein rohrartige Fluidleitung für ein Wärmeübertragungsfluid, wie beispielsweise Wasser, vollständig in den Ausnehmungen 5 aufgenommen ist.

Die Ausnehmungen 5 sind durch Schnitte gebildet und werden, nachdem das Rohr 4 darin eingelegt wurde, mit einer Gussmasse 6 gefüllt, die insbesondere vollständig aushärtet.

Die Fig. 1 bis 8 betreffen Ausgestaltungen, wie sie vorstehend beschrieben sind, und zwar

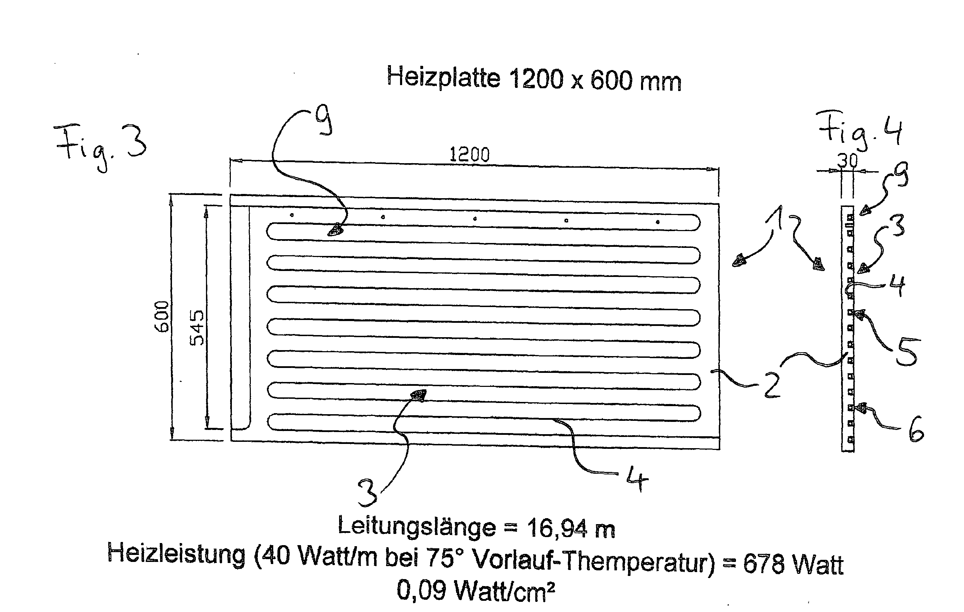

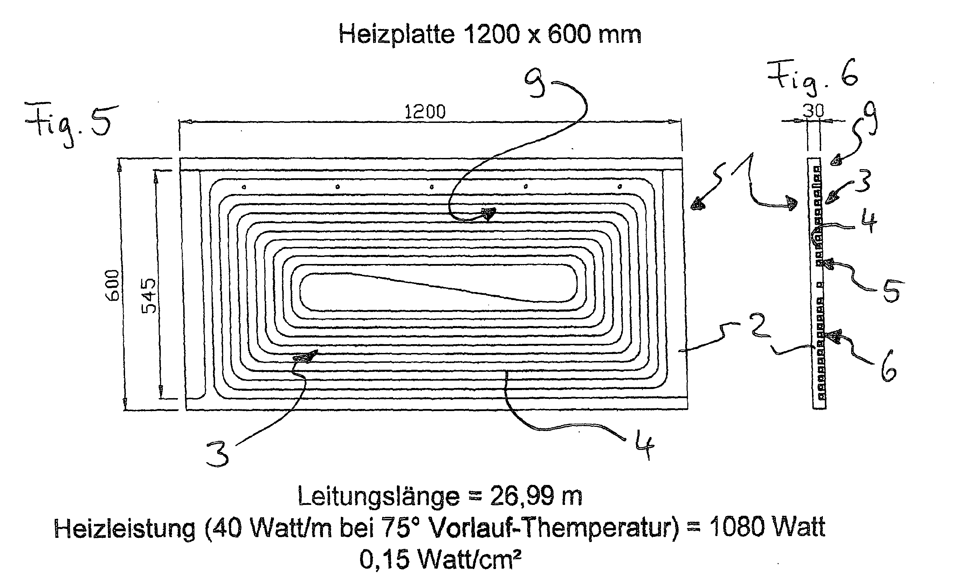

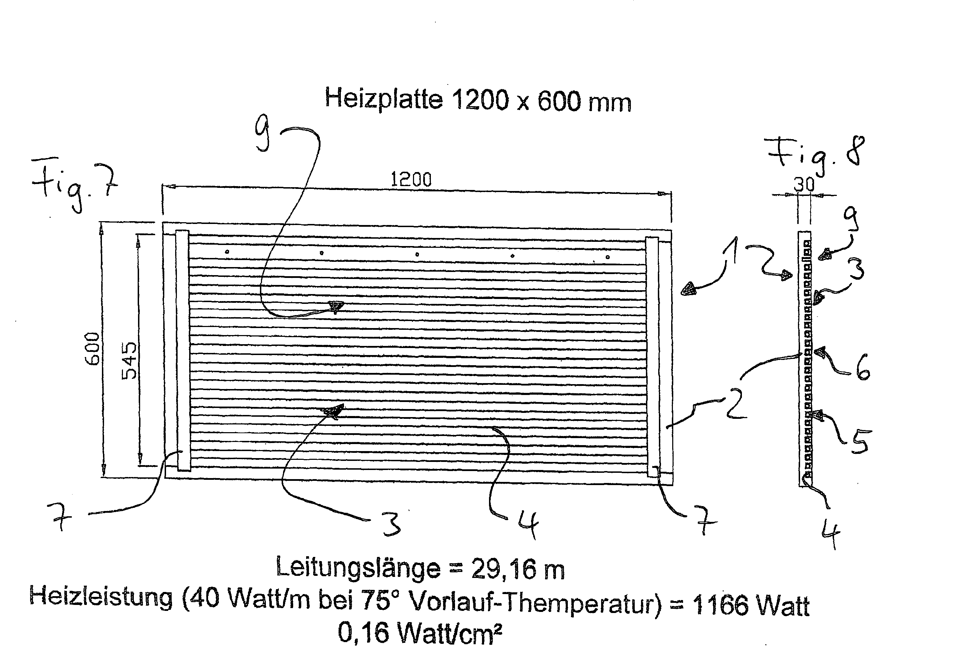

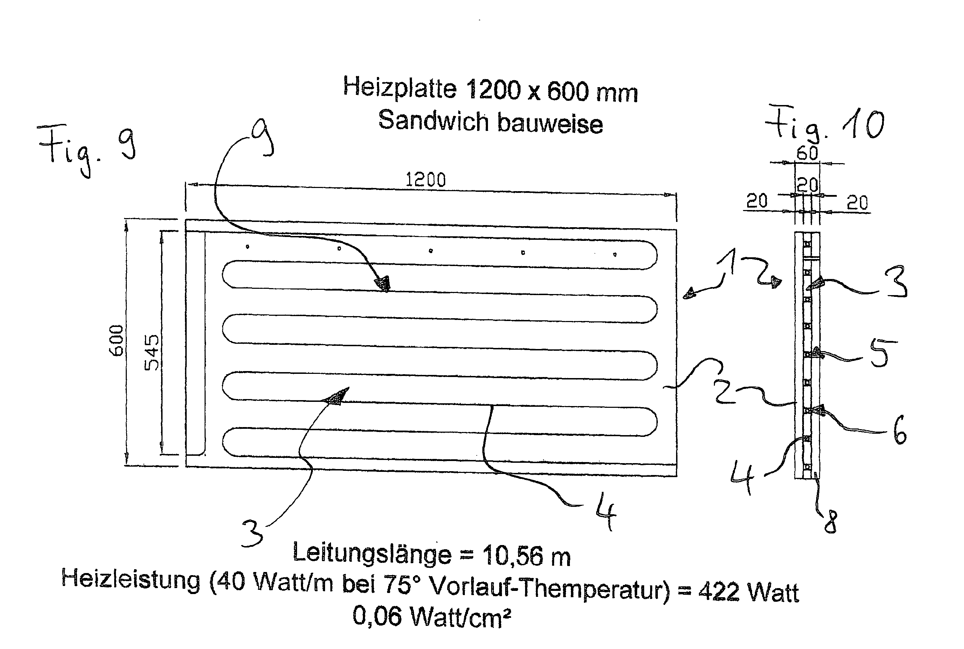

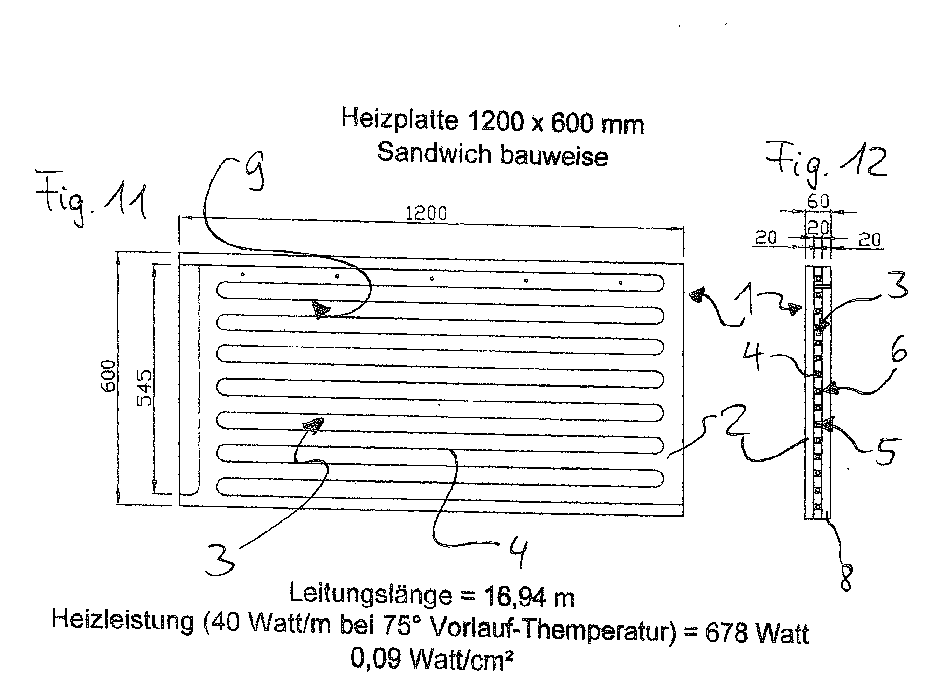

die Fig. 1 und 2 eine Ausgestaltung mit einem Heizsystem 3 mit einem mehrfach S-artig oder mäanderartig verlaufenden Rohr 4, die Fig. 3 und 4 eine Ausgestaltung mit einem Heizsystem 3 mit einem mehrfach S-artig oder mäanderartig verlaufenden Rohr 4, gegenüber der Version in den Fig. 1 und 2 mit höherer Anzahl von Biegungen im Verlauf des Rohrs 4 und damit höherer Leitungslänge und Leistung bei gleicher Heizkörperfläche,
die Fig. 5 und 6 eine Ausgestaltung mit einem Heizsystem 3 mit einem doppelt "gewickelt" verlaufenden Rohr 4, und
die Fig. 7 und 8 eine Ausgestaltung mit einem Heizsystem 3 mit einer Mehrzahl von parallelen Rohren 4, die an ihren Enden in Verbindungsleitungen 7 münden.

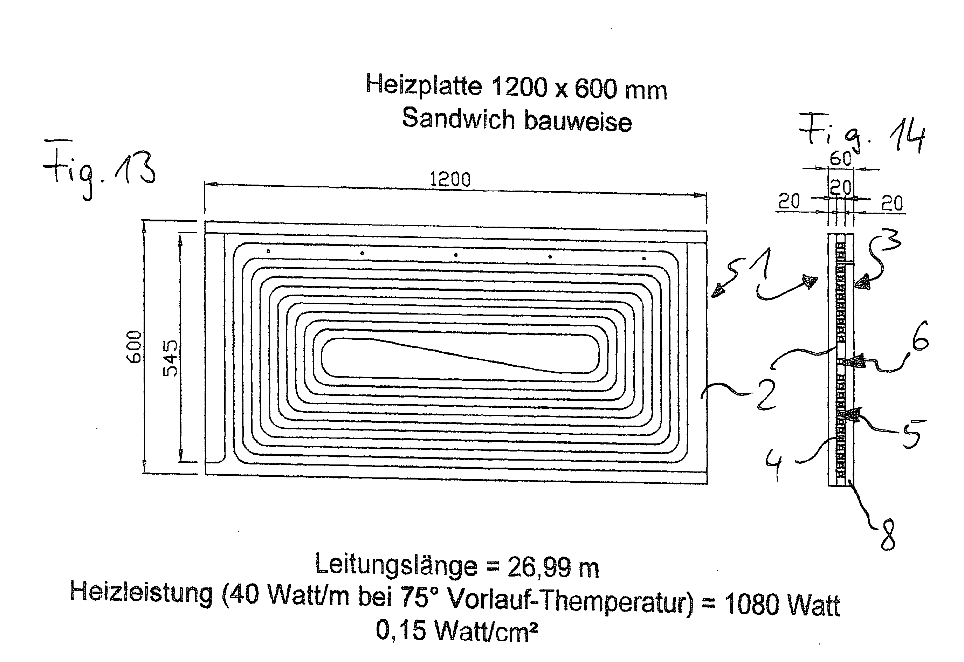

Bei den Ausgestaltungen gemäß den Fig. 9 bis 16 ist zusätzlich zu den Komponenten der Ausführungsbeispiele nach den Fig. 1 bis 8 noch ein Abdeckelement 8 vorgesehen. Damit sind die Ausnehmung(en) 4 in der Rückseite 9 des Natursteinplattenelementes 2 abgedeckt. Das Abdeckelement 8 kann beispielsweise aus Naturstein bestehen. Weiterhin kann es zusätzlich oder alternativ eine Wärmeisolierung enthalten oder bilden. Ferner kann das Abdeckelement 8 Befestigungseinrichtungen (nicht gezeigt) für seine Montage und/oder die Montage des Natursteinplattenelementes 2 an ihm aufweisen. Letzteres ermöglicht beispielsweise eine ortsfeste Anbringung des Abdeckelementes 8 und dann eine Montage des Natursteinplattenelementes 2 samt Heizsystem 3 daran. Die Fig. 9 bis 16 betreffen Ausgestaltungen, wie sie vorstehend mit dem Abdeckelement 8 beschrieben sind, und zwar
die Fig. 9 und 10 eine Ausgestaltung mit einem Heizsystem 3 mit einem mehrfach S-artig oder mäanderartig verlaufenden Rohr 4,
die Fig. 11 und 12 eine Ausgestaltung mit einem Heizsystem 3 mit einem mehrfach S-artig oder mäanderartig verlaufenden Rohr 4, gegenüber der Version in den Fig. 1 und 2 mit höherer Anzahl von Biegungen im Verlauf des Rohrs 4 und damit höherer Leitungslänge und Leistung bei gleicher Heizkörperfläche,
die Fig. 13 und 14 eine Ausgestaltung mit einem Heizsystem 3 mit einem doppelt "gewickelt" verlaufenden Rohr 4, und

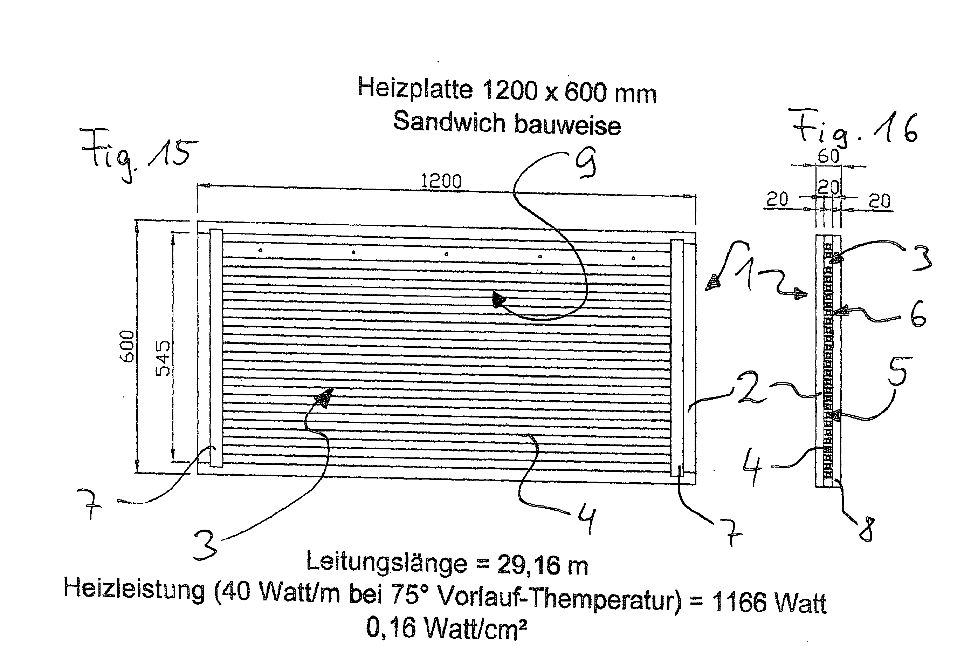

die Fig. 15 und 16 eine Ausgestaltung mit einem Heizsystem 3 mit einer Mehrzahl von parallelen Rohren 4, die an ihren Enden in Verbindungsleitungen 7 münden.

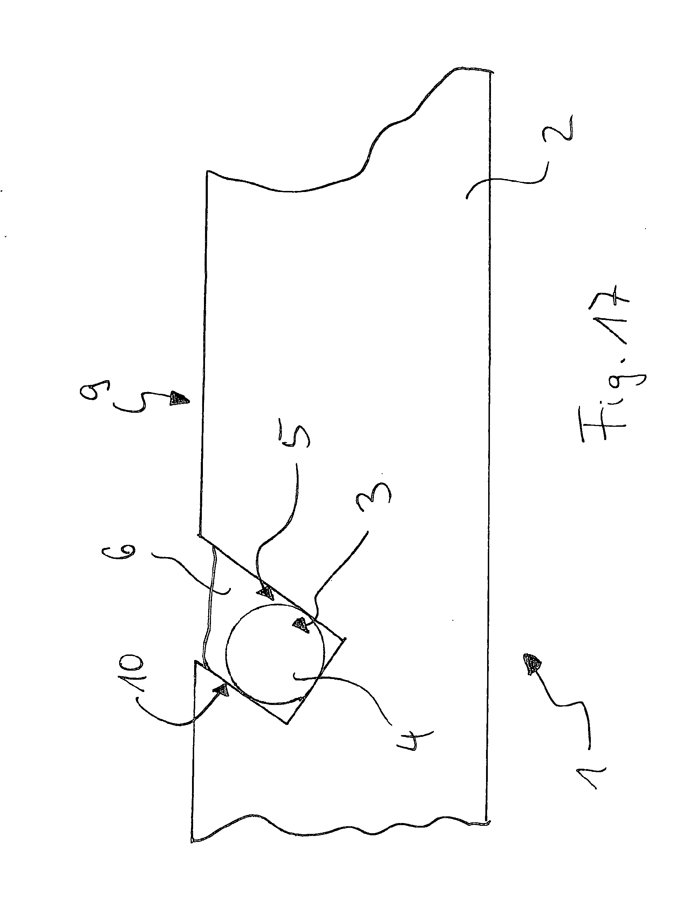

Noch eine weitere Ausgestaltungsmöglichkeit ist anhand einer schematischen teilweisen Querschnittsansicht in der Fig. 17 verdeutlicht. Wie leicht zu erkennen ist, verläuft die Ausnehmung 5 schräg in das Natursteinplattenelement 2 hinein, so dass eine Hinterschneidung 10 gebildet ist, die das Rohr 4 von der Rückseite 9 des Natursteinplattenelementes 2 teilweise überdeckt. Damit kann ein besonders intensiver Kontakt zwischen einerseits dem Heizsystem 3, genauer zwischen einerseits jedem seiner Rohre 4 und eventuell Verbindungsleitungen 7, und andererseits dem Natursteinplattenelement 2 erzielt werden.

Nachfolgend werden noch einige weitere Ausgestaltungen, Einzelmerkmale, Wirkungsweisen, Funktionen und Vorteile angegeben, die mit allen vorstehenden Ausführungsbeispielen zu kombinieren sind, soweit Merkmale nicht direkt konkurrieren.

Das Natursteinplattenelement 2 kann aus einer Natursteinplatte in jeglicher Stärke, Größe, Farbe und Form bestehen. Das Heizsystem 3 kann Rohre aus Kupfer, Stahl, Edelstahl oder PVC in jeglicher Größe und Art mit den dazugehörigen Lötfittings und Formteilen enthalten.

Als Fräs- oder Schnittarten der Natursteinplatte des Natursteinplattenelement 2 kommen insbesondere, aber nicht beschränkend, in Frage:
- bivalar
- mäanderförmig
- komplette Fläche ausgefräst bzw. Teilflächen ausgefräst

Die Verlegeformen oder -arten Komponenten des Heizsystems 3, wie beispielsweise Rohre, Heizelemente, Warm- oder Heizwasserträger und sonstige Wärmeträger enthalten insbesondere folgende Versionen:
- bivalar
- mäanderförmig
- komplette Wärmeträgerplatte
- Registerverlegung

Die Gussmasse 6 kann beispielsweise durch Ausschlämmen der Ausnehmung(en) 5 in dem Natursteinplattenelement 2 mit einer Klebmasse oder einer Spachtelmasse oder mit sonstigem Füllmaterial eingebracht werden. Die Bezeichnung "Gussmasse" soll im Rahmen der vorliegenden Unterlagen keine Beschränkung auf eine Verarbeitung oder Anwendung ausschließlich durch Gießen bedeuten. Vielmehr kann die entsprechende Masse auch in die Ausnehmung(en) 5 gepresst oder gestrichen werden. Auch sind Prozesse, wie Wärmehärten, Schmelzen, Sintern usw. als Behandlungen und Nachbehandlungen der Gussmasse 6 je nach Material und Anforderungen möglich.

Ein Anschluss an Heizungsversorgungsleitungen (nicht gezeigt) ist an allen Stellen des Natursteinheizkörpers 1 möglich. Weiterhin ist es bevorzugt, wenn das Heizrohrsystem Zuleitungs- und Ableitungsanschlüsse (nicht gezeigt) für ein Wärmeträgerfluid und/oder Zuleitungssteuer- und/oder -regeleinrichtungen (nicht gezeigt) aufweist, die selbst Wärmesensoren (nicht gezeigt) enthalten können oder denen Wärmesensoren an oder in dem Natursteinplattenelement 2 oder in einem Abstand davon zugeordnet sind. Insbesondere Wärmesensoren an oder in dem Natursteinplattenelement 2 ermöglichen eine Berücksichtigung der Wärmekapazität, Restwärme und dergleichen des Natursteinplattenelementes 2 und somit eine effiziente Heizsteuerung und/oder -regelung.

Bezüglich verwendeter Rohre 4 wird lediglich exemplarisch auf die Produktspezifikationen, einschließlich Herstellungsverfahren in der Broschüre CUPROKLIMA ®, "Qualitätsstandard für lagengespulte ACR-Kupferrohre", 09.03, der Firma Wieland-Werke AG, D-89079 Ulm Bezug genommen. Zur Vermeidung der bloßen Wiedergabe dieser vollständigen Broschüre ist deren gesamter Inhalt hiermit durch Bezugnahme in den vorliegenden Unterlagen aufgenommen. Bei den in dieser druckschriftlichen Veröffentlichung enthaltenen konkreten physikalischen und Materialangaben handelt es sich um solche für einzelne Ausführungsbeispiele.

Diese physikalischen und Materialangaben bestimmen neben den jeweils konkreten Ausgestaltungsmöglichkeiten auch grundsätzliche Arten von Varianten und Versionen mit ähnlichen oder vergleichbaren Wirkungen.

Bevorzugt, aber nicht ausschließlich, enthält das Heizsystem 3 Rotguss- und/oder Kupferfittings für Biegungen und Abzweigungen im Verlauf des Rohres 4 insbesondere in der Ausgestaltung als Lötfittings. Vorzugsweise genügen diese Fittings den Spezifikationen, wie sie insbesondere in dem Prospekt "Technischen Katalog", 07/01 von Bänninger, Firma International Building Products GmbH, D-35394 Gießen, offenbart sind. Zur Vermeidung der bloßen Wiedergabe dieses vollständigen Prospektes ist dessen gesamter Inhalt hiermit durch Bezugnahme in den vorliegenden Unterlagen aufgenommen. Die Fittings, die für die vorliegende Erfindung mit Vorzug verwendet werden, können dabei entweder direkt die in diesem Prospekt angegebenen Produkte sein, oder Produkte, den dieselben Spezifikationen oder gleichwirkenden Merkmale erfüllen.

Insbesondere bevorzugt sind Lötfittings aus Kupfer nach DIN EN 1254 - Teil 1. Speziell bevorzugt sind dabei ein Werkstoff Cu-DHP mit der Werkstoffnummer CW024A nach DIN EN 1412 (alte Bezeichnung nach DIN 1787: SF-Cu, Werkstoffnummer 2.0090). Dabei gilt für die chemische Zusammensetzung beispielsweise annähernd oder zumindest ungefähr ein Minimum von 99,90 % Cu und 0,015 - 0,040 % P.

Bei Rotguss-Lötfittings werden solche nach DIN EN 1254 - 1 bevorzugt (früher DIN 2856). Lediglich der Vollständigkeit halber werden noch Gewindefittings aus Rotguss mit Baumaßen analog DIN 2950 (Temperguss) und einer Rotguß-Legierung nach DIN 17656 genannt. Vorzugsweise Zusammensetzungen liegen etwa in den nachfolgenden Bereichen oder bei den nachfolgenden Werten:

| | |
|---|---|
| Sn (Zinn) | 3,8 - 4,5 % |
| Pb (Blei) | 2,0 - 3,0 % |
| Zn (Zink) | 5,5 - 6,5 % |
| Ni (Nickel) | 0,3 - 0,6 % |
| Sb | max. 0,1 % |
| Fe | max. 0,3 % |
| Sonstige | max. 0,25 % |
| Cu (Kupfer) | Rest |

Bei den vorstehenden konkreten physikalischen und Materialangaben handelt es sich um solche für einzelne Ausführungsbeispiele. Diese physikalischen und Materialangaben bestimmen neben den jeweils konkreten Ausgestaltungsmöglichkeiten auch grundsätzliche Klassen von Varianten und Versionen mit ähnlichen oder vergleichbaren Wirkungen.

Zur näheren, aber auch nur beispielsweisen Spezifizierung von vorzugsweise verwendeter Gussmasse 6 wird hiermit auf die Produktdatenblätter 3.22 (03/03) und 3.31 (02/03) der Firma Schönex GmbH, D-48713 Rosendahl, Bezug genommen und werden diese Produktdatenblätter zur Vermeidung deren vollständigen bloßen Wiedergabe vollinhaltlich hiermit durch Bezugnahme in den vorliegenden Unterlagen aufgenommen. Damit sind bevorzugte Gussmassen 6 in Form von Glätt- und vor allem Nivelliermassen (Produktdatenblatt 3.22) sowie selbstverlaufende Kunstharz-Zement-Ausgleichsmörtel (Produktdatenblatt 3.31) ausreichend bestimmt. Die in den hierin durch Bezugnahme vollumfänglich aufgenommenen Produktdatenblätter enthaltenen konkreten physikalischen und Materialangaben betreffen bevorzugte Ausführungsbeispiel der vorliegenden Erfindung. Diese physikalischen und Materialangaben bestimmen neben den jeweils konkreten Ausgestaltungsmöglichkeiten auch grundsätzliche Gattungen von Varianten und Versionen mit ähnlichen oder vergleichbaren Wirkungen.

Die vorstehend durch Bezugnahme vollständig in die vorliegenden Unterlagen aufgenommenen Veröffentlichungen betreffend Rohre, Fittings und Gusmassen sind einerseits exemplarisch zu verstehen, indem sich daraus konkrete Ausgestaltungsmöglichkeiten ergeben, die auch mit gutem bis hervorragendem Erfolg getestet wurden, und zeigen andererseits dem Fachmann vorteilhafte oder relevante Größen und deren Werte- oder Bestimmungsbereiche auf, so dass sich dem Fachmann in für ihn verständlicher Weise mit und aus diesen weiteren Angaben ein weites Feld an Realisierungsmöglichkeiten mit zahlreichen Vorteilen eröffnet.

Wie bereits eingangs angegeben, schafft die Erfindung einen heizbaren Gegenstand mit einem solchen Natursteinheizkörper.

Vorzugsweise handelt es sich bei diesem Gegenstand und insofern auch bei einer Verwendung eines solchen Natursteinheizkörpers um einen Massagetisch, eine Rüttelbank, eine Wärmebank, eine Duschwanne, eine Duschrückwand oder Duschkabinenrückwand, oder eine Wannenrückwand oder Badewannenrückwand.

Bevorzugte Materialien für den Natursteinheizkörper für diese Gegenstände oder die entsprechende Verwendung des Natursteinheizkörpers ist Stein.

Gemäß einem auch selbständig als Erfindung anzusehenden Aspekt ist für die in den vorliegenden Unterlagen im übrigen erläuterte und als erfindungsgemäß dargestellte Bauart eines Natursteinheizkörpers als Material insbesondere für diese Gegenstände oder die entsprechende Verwendung eines Heizkörpers analog zu dem Natursteinheizkörper als weiteres Material auch Beton, Korean oder Hydrostone vorgesehen.

Zusätzlich zu den Ausführungen zur gesamten Bauart sowie Merkmalen im Einzelnen, wie sie für den Natursteinheizkörper vorher beschrieben wurden, sind insbesondere für Verwendungen des Natursteinheizkörpers oder Betonsteinheizkörpers oder allgemein Betonheizkörpers, wobei als Material für letzteren auch Korean oder Hydrostone vorgesehen sein kann, ohne dass dies als weitere Alternativen im Folgenden ständig mit angegeben wird, als oder für einen Massagetisch, eine Rüttelbank, eine Wärmebank, eine Duschwanne, eine Duschrückwand oder Duschkabinenrückwand, oder eine Wannenrückwand oder Badewannenrückwand oder ähnlich Anwendungen oder Verwendungen nachfolgend noch einige bevorzugte und/oder vorteilhafte Merkmale angegeben, die einzeln oder in Kombinationen oder in Kombinationen mit anderen Merkmalen, die oben beschrieben wurden, bei dem heizbaren Gegenstand sowie dem in diesem enthaltenen Natursteinheizkörper oder Betonsteinheizkörper oder allgemein Betonheizkörper vorgesehen sein können.

Wie erwähnt, kann statt Beton, der als Alternative für Stein oder Naturstein bei entsprechenden heizbaren Gegenständen auch vorgesehen sein kann, auch Korean oder Hydrostone als Material vorgesehen sein.

Der heizbare Gegenstand kann einen Heizkörper enthalten, wie er grundsätzlich im Rahmen der Ausführungsbeispiele gemäß den Fig. 1 bis 17 erläutert wurde, wobei als Natursteinplattenelement 2 auch ein Plattenelement aus Beton, Korean oder Hydrostone oder einem ähnlichen Material verwendet werden kann.

Für ein solches Plattenelement aus Stein, Naturstein, Beton, Korean oder Hydrostone oder einem ähnlichen Material gelten insbesondere bei Verwendung im Rahmen eines Heizkörpers für einen Massagetisch, eine Rüttelbank, eine Wärmebank, eine Duschwanne, eine Duschrückwand oder Duschkabinenrückwand, oder eine Wannenrückwand oder Badewannenrückwand oder ähnlich Anwendungen vorzugswseise und mit Vorteil die nachfolgenden Merkmale, einschließlich Kombinationen davon sowie Kombinationen mit anderen konkreten Merkmalen der Erfindung auch aus anderen Ausführungsbeispielen und anderen Verwendungen insbesondere als Raumheizkörper.
- Das Plattenelement kann Stärken oder Dicken vorzugsweise im Bereich von ungefähr 3 cm bis zu etwa 20 cm haben.
- Die Leitungsführungen in dem Plattenelement können wie bei Hydrostone und insbesondere gemäß den Ausführungsbeispielen nach den Fig. 1 bis 17 sein.
- Insbesondere im Material des Plattenelements, ohne Beschränkung auf bestimmte Verwendungen, vorzugsweise aber jedenfalls bei Verwendung als Bank oder Tisch, ist vorzugsweise wenigstens ein Temperaturfühler, der an eine Steuerung angeschlossen ist, die zum Einhalten einer voreinstellbaren oder vorwählbaren Temperatur insbesondere unter Berücksichtigung von Ausgaben des Temperaturfühlers ausgelegt ist. Ein solcher Temperaturfühler kann beispielsweise als Infrarotsensor gestaltet sein.
- Bevorzugt ist der heizbare Gegenstand, insbesondere sein Heizkörper und bevorzugt dessen Plattenelement für Temperaturen von etwa 10 °C bis ca. 90 °C ausgelegt.
- In weiterer Ausgestaltung oder alternativ zur vorstehend angegebenen Variante kann eine Temperaturregelung des heizbaren Gegenstandes, insbesondere seines Heizkörpers und bevorzugt dessen Plattenelementes manuell oder aber besonders bevorzugt elektronisch erfolgen.
- Eine weitere vorteilhafte Ausgestaltung besteht darin, dass der heizbare Gegenstand mit insbesondere eingebauten Massagedüsen versehen ist. Dabei kann eine Aufwärmung von Wasser für die Massagedüsen auch durch die Heizung des Heizkörpers oder des Plattenelementes erfolgen, es kann aber auch Warmwasser aus einem Brauchwassersystem verwendet werden. Eine Temperaturregelung des Wassers kann manuell oder aber bevorzugt elektronisch erfolgen.
- Ein erfindungsgemäßer heizbarer Gegenstand kann ferner über wenigstens einen Brausekopf und insbesondere einen eingebauten Brausekopf verfügen. Es kann aber auch eine Mehrzahl von in Anordnung und/oder Wirkung und/oder Bauart unterschiedlicher Brauseköpfe (Normaldusche, Schwallbrause, und anderes) vorgesehen sein. Dabei kann eine Aufwärmung von Wasser für den wenigstens einen Brausekopf auch durch die Heizung des Heizkörpers oder des Plattenelementes erfolgen, es kann aber auch Warmwasser aus einem Brauchwassersystem verwendet werden. Eine Temperaturregelung des Wassers kann manuell oder aber bevorzugt elektronisch erfolgen.
- Der heizbare Gegenstand und insbesondere sein Heizkörper und bevorzugt dessen Plattenelement kann über einen Zulauf und/oder Ablauf für Wasser verfügen. Ein solcher Zulauf und/oder Ablauf kann beispielsweise durch Ausfräsung hergestellt sein.
- Die Oberfläche des heizbaren Gegenstandes, insbesondere seines Heizkörpers und bevorzugt dessen Plattenelementes kann, wie Hydrostone, speziell behandelt sein. Vorzugsweise handelt es sich um Behandlungen wie: Schleifen, Polieren, Bürsten, Sandstrahlen, Flammen oder Kombinationen daraus.
- Bei einigen Anwendungen des Heizkörpers oder Ausführungen des heizbaren Gegenstandes, wie beispielsweise als Massagetisch, können mit Vorteil und bevorzugt Formgebungen insbesondere in der genutzten Oberfläche des Plattenelementes, wie z.B. Ausfräsungen zur Anpassung an einen darauf liegenden Menschenkörper vorgesehen sein.

Als weitere Ausgestaltungsmöglichkeit kann in Kombination mit jeglicher vorstehend erläuterten Variante sowie als Bestandteil jeglicher allgemein hierin offenbarten Gestaltung ferner mit Vorteil vorgesehen sein, dass zusätzlich zu dem Heizrohrsystem 3 oer allgemeiner ausgedrückt der Heizung des Gegenstandes, wie insbesondere einem Massagetisch, einer Rüttelbank, einer Wärmebank, einer Duschwanne, einer Duschrückwand oder Duschkabinenrückwand, oder einer Wannenrückwand oder Badewannenrückwand durch Warmwasser eine elektrische Heizung in den Gegenstand integriert oder daran aufgebracht ist. Derartige elektrische Heizungen sind für sich bekannt, so dass auf deren Ausgestaltungen einschließlich Steuerung und Regelung hier nicht weiter eingegangen werden braucht. Es wird jedoch darauf hingewiesen, dass insbesondere bei Gegenständen, die in feuchten oder nassen Umgebungen eingesetzt werden, eine unübertreffliche Sicherheit durch verwendung nur der Warmwasserheizung erreicht wird, da damit grundsätzlich kein Risiko einer Verletzung durch Stromeinwirkung besteht.

Die vorstehend angegebenen und erläuterten Merkmale und Merkmalskombinationen der Ausführungsbeispiele dienen lediglich der exemplarischen Verdeutlichung der Erfindung und nicht deren Beschränkung. Der Offenbarungsumfang der vorliegenden gesamten Unterlagen ist durch das bestimmt, was für den Fachmann ohne weiteres in den Ansprüchen, aber auch aus der Beschreibung und unter Einbeziehung seines Fachwissens entnehmbar ist und/oder verstanden wird. Insbesondere umfasst die Erfindung ferner alle Variationen, Modifikationen, Kombinationen und Substitutionen, die der Fachmann dem gesamten Offenbarungsumfang der vorliegenden Unterlagen entnehmen kann. Ferner sind insbesondere alle einzelnen Merkmale und Ausgestaltungsmöglichkeiten der Erfindung und ihrer Ausführungsbeispiele kombinierbar.

## Patentansprüche

1. Natursteinheizkörper mit wenigstens einem Natursteinplattenelement (2) und einem Heizrohrsystem (3), das mit dem Natursteinplattenelement (2) in Kontakt ist und durch das eine Heizflüssigkeit geleitet ist,
**dadurch gekennzeichnet,**
**dass** das Natursteinplattenelement (2) auf einer Seite (Rückseite 9) wenigstens eine nutartige oder flächige Ausnehmung (5) enthält, in der das Heizrohrsystem (3) zumindest teilweise aufgenommen ist.

2. Natursteinheizkörper nach Anspruch 1,
**dadurch gekennzeichnet,**
**dass** das Heizrohrsystem (3) über eine Gussmasse (6) mit dem Natursteinplattenelement (2) in Kontakt ist, und
**dass** vorzugsweise die Gussmasse (6) zumindest weitgehend und insbesondere vollständig ausgehärtet ist.

3. Natursteinheizkörper nach Anspruch 1 oder 2,
**dadurch gekennzeichnet,**
**dass** jede Ausnehmung (5) ein Schnitt oder eine Ausfräsung mit ausreichender Breite zur Aufnahme jeweils eines Rohres (4) des Heizrohrsystems (3) ist.

4. Natursteinheizkörper nach einem der vorhergehenden Ansprüche,
**dadurch gekennzeichnet,**
**dass** das Heizrohrsystem (3) wenigstens ein Rohr oder Rohrelement (4), das gerade oder gebogen, insbesondere einoder mehrfach S-förmig gebogen ist, oder eine Gitterstruktur aus einer Mehrzahl von Rohren (4) enthält, und/oder dass das Heizrohrsystem (3) wenigstens eine Fluidleitung enthält, die rohrartig ist und vorzugsweise zumindest im wesentlichen aus Kupfer, Stahl, Edelstahl oder PVC besteht, und/oder
**dass** das Heizrohrsystem (3) Zuleitungs- und Ableitungsanschlüsse für ein Wärmeträgerfluid und/oder Zuleitungssteuer- und/oder -regeleinrichtungen aufweist, und
**dass** vorzugsweise die Zuleitungssteuer- und/oder -regeleinrichtungen selbst Wärmesensoren enthalten, oder den Zuleitungssteuer- und/oder -regeleinrichtungen Wärmesensoren an oder in dem Natursteinplattenelement (2) oder in einem Abstand davon zugeordnet sind, und/oder
**dass** das Heizrohrsystem (3) wenigstens eine rohrartige Fluidleitung enthält, die zumindest im wesentlichen und bevorzugt vollständig innerhalb der Außenkontur des Natursteinplattenelementes (2) liegt.

5. Natursteinheizkörper nach einem der vorhergehenden Ansprüche,
**dadurch gekennzeichnet,**
**dass** jede Ausnehmung (5) von einer solchen Tiefe ist, dass die zugehörige rohrartige Fluidleitung zumindest im wesentlichen und insbesondere vollständig darin untergebracht ist, und/oder
**dass** jede Ausnehmung (5), ggf. jeder Schnitt oder jede Ausfräsung, zur Bildung von Hinterschneidungen (10) schräg ist oder eine entsprechende Querschnittsform aufweist, so dass die zugehörige rohrartige Fluidleitung zumindest teilweise hinter der Hinterschneidung (10) liegt.

6. Natursteinheizkörper nach einem der vorhergehenden Ansprüche,
**dadurch gekennzeichnet,**
**dass** ein Abdeckelement (8) enthalten ist, das auf der Seite (Rückseite 9) der wenigstens einen Ausnehmung (5) an dem Natursteinplattenelement (2) angeordnet ist, wobei das Abdeckelement (8) vorzugsweise
- aus Naturstein besteht,
- eine Wärmeisolierung enthält oder bildet, und/oder
- Befestigungseinrichtungen für seine Montage und/oder die Montage des Natursteinplattenelementes (2) an ihm aufweist.

7. Heizbarer Gegenstand mit einem Natursteinheizkörper nach einem der vorhergehenden Ansprüche.

8. Heizbarer Gegenstand nach Anspruch 7, wobei der heizbare Gegenstand ein Massagetisch, eine Rüttelbank, eine Wärmebank, eine Duschwanne, eine Duschrückwand oder Duschkabinenrückwand, oder eine Wannenrückwand oder Badewannenrückwand ist.

9. Heizbarer Gegenstand nach Anspruch 7 oder 8, wobei der Natursteinheizkörper als Grundmaterial Stein enthält, und/oder wobei zusätzlich eine elektrische Heizung integriert oder aufgebracht ist.

10. Heizbarer Gegenstand, der einen Heizkörper analog zu dem Natursteinheizkörper nach einem der Ansprüche 1 bis 6 enthält, jedoch statt Stein als Grundmaterial Beton, Korean oder Hydrostone enthält.

11. Heizbarer Gegenstand nach Anspruch 10, wobei der heizbare Gegenstand ein Massagetisch, eine Rüttelbank, eine Wärmebank, eine Duschwanne, eine Duschrückwand oder Duschkabinenrückwand, oder eine Wannenrückwand oder Badewannenrückwand ist, und/oder wobei zusätzlich eine elektrische Heizung integriert oder aufgebracht ist.

12. Verwendung eines Natursteinheizkörpers nach einem der Ansprüche 1 bis 6, als oder für einen Massagetisch, eine Rüttelbank, eine Wärmebank, eine Duschwanne, eine Duschrückwand oder Duschkabinenrückwand, oder eine Wannenrückwand oder Badewannenrückwand.

13. Verwendung eines analog zu einem Natursteinheizkörper nach einem der Ansprüche 1 bis 6 aufgebauten Beton-, Korean- oder Hydrostone-Steinheizkörpers als oder für einen Massagetisch, eine Rüttelbank, eine Wärmebank, eine Duschwanne, eine Duschrückwand oder Duschkabinenrückwand, oder eine Wannenrückwand oder Badewannenrückwand.

14. Herstellungsverfahren für einen Natursteinheizkörper mit folgenden Schritten:
auf einer Seite (Rückseite 9) eines Natursteinplattenelementes (2) wird wenigstens eine Ausnehmung (5) eingebracht, ein Heizrohrsystem (3) wird zumindest teilweise in dieser wenigstens einen Ausnehmungen (5) untergebracht, und
vor oder nach dem Unterbringen des Heizrohrsystems (3) in der Ausnehmung (5) wird eine Gussmasse (6) in die Ausnehmung (5) gegeben.

15. Herstellungsverfahren für einen Natursteinheizkörper nach Anspruch 14,
**dadurch gekennzeichnet,**
**dass** jede Ausnehmung (5) durch Schneiden oder Fräsen auf der einen Seite (Rückseite 9) des Natursteinplattenelementes (2) hergestellt wird.

16. Herstellungsverfahren für einen Natursteinheizkörper nach Anspruch 14 oder 15,
**dadurch gekennzeichnet,**
**dass** ein Natursteinheizkörper (1) nach einem der Ansprüche 1 bis 6 hergestellt wird.
